(19) **Europäisches Patentamt**
**European Patent Office**
**Office européen des brevets**

(11) **EP 4 290 494 A1**

(12) **EUROPEAN PATENT APPLICATION**

(43) Date of publication:
**13.12.2023 Bulletin 2023/50**

(21) Application number: **22178157.8**

(22) Date of filing: **09.06.2022**

(51) International Patent Classification (IPC):
**G08G 3/02** *(2006.01)* **G01S 13/937** *(2020.01)*

(52) Cooperative Patent Classification (CPC):
**G08G 3/02; G01S 13/726; G01S 13/937**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FURUNO ELECTRIC CO., LTD.**
**Nishinomiya-City, Hyogo 662-8580 (JP)**

(72) Inventors:
• **IWATA, Kazunobu**
**Nishinomiya-City, 662-8580 (JP)**

• **TAKAHASHI, Hironori**
**Nishinomiya-City, 662-8580 (JP)**
• **FUJIOKA, Daisuke**
**Nishinomiya-City, 662-8580 (JP)**

(74) Representative: **Müller Hoffmann & Partner Patentanwälte mbB**
**St.-Martin-Strasse 58**
**81541 München (DE)**

Remarks:
Amended claims in accordance with Rule 137(2) EPC.

(54) **COLLISION ALARM APPARATUS FOR VESSELS AND METHOD THEREOF**

(57) The present disclosure provides collision alarm apparatus (102; 600; 800) including a velocity sensor (106; 606; 806) configured to detect velocity data of one or more target vessels (114a, 114b, 114c) relative to a vessel (112), a risk analyzer module (104; 602; 802) configured to determine a risky target vessel (114a) having risk of collision with the vessel based on positional information and traveling directions of target vessels relative to the vessel. The apparatus includes a velocity monitor-ing module configured to monitor the velocity data of the risky target vessel, and determine occurrence of an alarm trigger condition, if velocity of the risky target vessel relative to the vessel on a line connecting the risky target vessel and vessel is maintained within a threshold velocity range for a threshold time period. The apparatus includes a control module to trigger an alarm signal upon determining the occurrence of alarm trigger condition.

FIG. 1

**Description**

**TECHNICAL FIELD**

The present disclosure generally relates object detection techniques and, more particularly relates, to an apparatus and method for detecting collision scenarios in a marine environment and generating an alarm based on determining a potential collision scenario between marine vessels.

**BACKGROUND OF THE INVENTION**

Moving bodies in the marine environment such as vessels, ships, boats, etc. (commonly referred to herein as 'vessels') are typically used for the transportation of people, and goods, among other various applications, across the globe. The navigation of vessels at sea is regulated by "Convention on the International Regulations for Preventing Collisions at Sea, 1972 (COLREGs)" issued by the International Maritime Organization (IMO). According to the COLREGs convention, particularly rules 16 and 17, one vessel (e.g., a stand-on vessel) shall be required to maintain its course and speed when there is a risk of collision while the other vessel *(e.g.,* a give-way vessel) shall perform an avoidance action to avoid the potential collision scenario. However, when the collision cannot be avoided only by the movement of the give-way vessel trying to avoid the collision, the stand-on vessel is required to take the best cooperative action to avoid the collision, and not to just maintain its course and speed. When deciding whether the stand-on vessel should take cooperative action or not, it is necessary to quickly and accurately ascertain whether the give-way vessel that should take evasive action is taking appropriate evasive action or not.

Conventional approaches such as visual observation, an observation method utilizing radar information (e.g., by target tracking or by echo trail), and an observation method utilizing transmission information (AIS, radiotelephone, whistle signal) of the other vessels are generally used as a means for grasping the movement of the other vessels and as a precursor to forming the intention to maneuver the own vessel. As may be understood, visual observation methods are not reliable, as there are cases in which the other vessels do not make a significant movement, or in which a definite judgment cannot be made depending on the shape of the other vessels and the overall visibility conditions. Additionally, as it is not possible to keep watch for multiple targets, it is possible to miss the presence or absence of changes in the movement of multiple target vessels. In the case of using radar information, since information is obtained based on the difference between successive scans in the conventional systems (e.g., by target tracking or echo trails), there exists a time lag of several seconds between the moment information being captured, thus when the opposite ship changes its moving characteristics, these changes are reflected in the motion information ascertained through target tracking or the echo trail with a delay. Due to this time delay, there is a possibility that the time for performing an avoidance operation is lost. In the case of using the information transmitted by the other vessels, there is a possibility that the information from the other vessels cannot be obtained due to a lack of availability of proper equipment or difference in equipment between the two vessels. In such scenarios, due to a lack of information about the opponent vessel, determining a potential collision scenario between the vessels and gathering information on an avoidance action of the opponent vessel by the control systems are delayed. As a result, providing the warning signal is delayed which may lead to a collision between the vessel and the other vessel.

Therefore, there exists a need for techniques for monitoring the vicinity of a vessel, identifying events where another vessel in the vicinity has not taken any collision-avoidance measures in case of a potential collision scenario, and raising alarm in such scenario, in addition to providing other technical advantages.

**SUMMARY OF THE INVENTION**

In order to solve the foregoing problem and to provide other advantages, one aspect of the present disclosure is to provide a collision alarm apparatus. The collision alarm apparatus includes a velocity sensor associated with a vessel that is configured to detect velocity data of one or more target vessels relative to the vessel. The collision alarm apparatus includes a risk analyzer module configured, at least in part, to determine a risky target vessel having a risk of collision with the vessel. The risky target vessel is determined from among the one or more target vessels based on positional information and traveling directions of the one or more target vessels relative to the vessel. Further, the collision alarm apparatus includes a velocity monitoring module configured, at least in part, to monitor the velocity data of the risky target vessel relative to the vessel on a line connecting the risky target vessel and the vessel, and determine an occurrence of an alarm trigger condition. The alarm trigger condition is determined if velocity of the risky target vessel relative to the vessel on the line connecting the risky target vessel and the vessel is maintained within a threshold velocity range at least for a threshold time period. The collision alarm apparatus includes a control module configured, at least in part, to trigger an alarm signal upon determining the occurrence of the alarm trigger condition.

An advantage of various embodiments is to select the risky target vessel from among the plurality of target vessels so that only the risky target vessel is monitored to check if the risky target vessel has taken appropriate steps to avoid a potential collision. So, the velocity of a target vessel without a collision risk does not need to be monitored. In case of the moving speed of the risky target vessel is maintained unchanged (*i.e.,* remains within the threshold range), it indicates that the risky target vessel is not taking any evasive actions, and an alarm can be generated to the vessel for warning the crew of the vessel.

In an aspect, the risk analyzer module is further configured to at least process positional information and the traveling direction of each target vessel of the one or more target vessels to determine the risky target vessel, and determine a potential collision point of the vessel and the risky target vessel based on the positional information and the velocity data of the risky target vessel relative to the vessel on the line connecting the risky target vessel and the vessel. An advantage of some of the embodiments is that as the relative velocity of the risky target vessel with respect to the vessel is calculated along a line connecting both the vessels, such calculation provides an accurate prediction of the potential collision scenario and onset of the alarm trigger conditions to warn the crew of the vessel.

In an aspect, the risk analyzer module is further configured to at least compute a potential collision time based at least on the velocity data of the risky target vessel relative to the vessel and the potential collision point, and compute the threshold velocity range and the threshold time period for the risky target vessel based at least on the velocity data of the risky target vessel relative to the vessel and the potential collision point. The threshold time period is less than the potential collision time. An advantage of various embodiments is to select the threshold velocity range and the threshold time period dynamically based on the relative velocity data and the potential collision time, thereby increasing the accuracy in predicting whether the risky target vessel is taking a collision-avoidance action or not.

In an aspect, the velocity monitoring module is further configured to at least monitor the velocity data of the risky target vessel relative to the vessel on the line connecting the risky target vessel and the vessel at a plurality of time instants within the threshold time period to determine the occurrence of the alarm trigger condition.

In an aspect, the collision alarm apparatus includes an object tracking device associated with the vessel. The object tracking device is configured to at least transmit electromagnetic waves within a predetermined area of the vessel, determine the one or more target vessels in the predetermined area in response to receipt of the electromagnetic waves being intercepted by the one or more target vessels, and determine the positional information and the velocity data of the one or more target vessels relative to the vessel.

Preferably, the object tracking device is a Doppler radar, and preferably, the velocity sensor is a Doppler velocity sensor. An advantage of obtaining the velocity and location data with a Doppler velocity sensor is that it is possible to quickly determine whether the potential collision target has performed the collision-avoidance action.

In an aspect, the risk analyzer module is further configured to at least receive at least one of the positional information and the velocity data of the risky target vessel from a base station communicably coupled to the vessel and the risky target vessel. An advantage of some embodiments is to augment the velocity data obtained from the object tracking device with the velocity data obtained data from the base station or to even use the velocity data obtained from the base station in isolation.

In an aspect, the object tracking device is further configured to at least receive at least one of the positional information and the velocity data of the risky target vessel from the risky target vessel.

In an aspect, the collision alarm apparatus includes a display interface associated with the vessel and configured to display at least the positional information and the traveling direction of the risky target vessel relative to the vessel, the velocity data of the risky target vessel relative to the vessel, and a warning notification upon determining the alarm trigger condition.

In an aspect, the collision alarm apparatus further includes an alarm device associated with the vessel, the alarm device configured to emit an alarm in response to receipt of the alarm signal. Instead of, or in addition to, a trigger that emits auditory audio or visual light, the alarm signal may be a trigger that transmits a steering control signal to the steering system in a direction to avoid collision.

Another aspect of the present disclosure is to provide a method that includes receiving positional information and traveling directions of one or more target vessels relative to a vessel. The method includes determining a risky target vessel having a risk of collision with the vessel. The risky target vessel is determined from among the one or more target vessels based on the positional information and the traveling directions of the one or more target vessels relative to the vessel. Further, the method includes monitoring velocity data of the risky target vessel relative to the vessel on a line connecting the risky target vessel and the vessel. The method further includes determining an occurrence of an alarm trigger condition. The alarm trigger condition is determined if the velocity of the risky target vessel relative to the vessel on the line connecting the risky target vessel and the vessel is maintained within a threshold velocity range at least for a threshold time period. The method includes triggering an alarm signal upon determining the occurrence of the alarm trigger condition.

In an aspect, the method further includes processing positional information and traveling direction of each target vessel of the one or more target vessels to determine the risky target vessel, and determining a potential collision point of the vessel and the risky target vessel based on the positional information and the velocity data of the risky target vessel relative to the vessel on the line connecting the risky target vessel and the vessel.

In an aspect, the method further includes computing a potential collision time based at least on the velocity data of the risky target vessel relative to the vessel and the potential collision point, and computing the threshold velocity range and the threshold time period for the risky target vessel based at least on the velocity data of the risky target vessel relative to the vessel and the potential collision point. Here, the threshold time period is less than the potential collision time.

In an aspect, the method further includes determining the velocity data of one or more target vessels relative to the vessel for the step of monitoring, *i.e.,* for monitoring velocity data of the risky target vessel.

The foregoing summary is illustrative only and is not intended to be in any way limiting. In addition to the illustrative aspects, embodiments, and features described above, further aspects, embodiments, and features will become apparent by reference to the drawings and the following detailed description.

## EFFECT(S) OF THE INVENTION

The present disclosure provides a collision alarm apparatus in a vessel that accurately determines a risky target vessel among a plurality of target vessels in the vicinity of the vessel, where the risky target vessel may have a risk of collision with the vessel. The apparatus detects if the risky target vessel has taken any collision-avoidance action or not based on pre-defined regulations. In an event of the risky target vessel not taking any collision-avoidance action, the apparatus raises an alarm to the vessel to take necessary steps.

## BRIEF DESCRIPTION OF THE DRAWINGS

The following detailed description of illustrative embodiments is better understood when read in conjunction with the appended drawings. For the purpose of illustrating the present disclosure, exemplary constructions of the disclosure are shown in the drawings. However, the present disclosure is not limited to a specific device, or a tool and instrumentalities disclosed herein. Moreover, those skilled in the art will understand that the drawings are not to scale.

FIG. 1 illustrates an example representation of an environment related to at least some example embodiments of the present disclosure;

FIG. 2 represents a velocity vector graph depicting a relation between velocity data of a risky target vessel and a vessel, in accordance with an embodiment of the present disclosure;

FIG. 3 represents a velocity vector graph depicting a potential collision time and a threshold time period, in accordance with an embodiment of the present disclosure;

FIGS. 4A and 4B, represent velocity-time graphs depicting the variation of the velocity data associated with the risky target vessel with respect to time, in accordance with an embodiment of the present disclosure;

FIG. 5 represents a graph for monitoring the velocity data associated with the risky target vessel relative to the vessel at multiple timestamps, in accordance with an embodiment of the present disclosure;

FIG. 6 illustrates a simplified block diagram representation of a collision alarm apparatus, in accordance with an embodiment of the present disclosure;

FIGS. 7A and 7B, illustrate simplified block diagram representations of the apparatus of

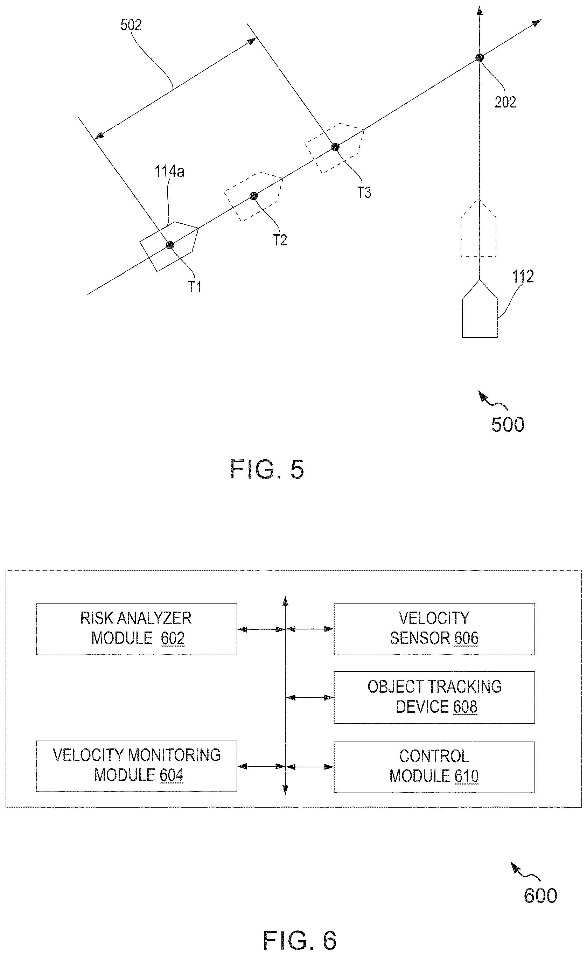

FIG. 6, receiving positional information, velocity data, and traveling direction of the risky target vessel, in accordance with some embodiments of the present disclosure;

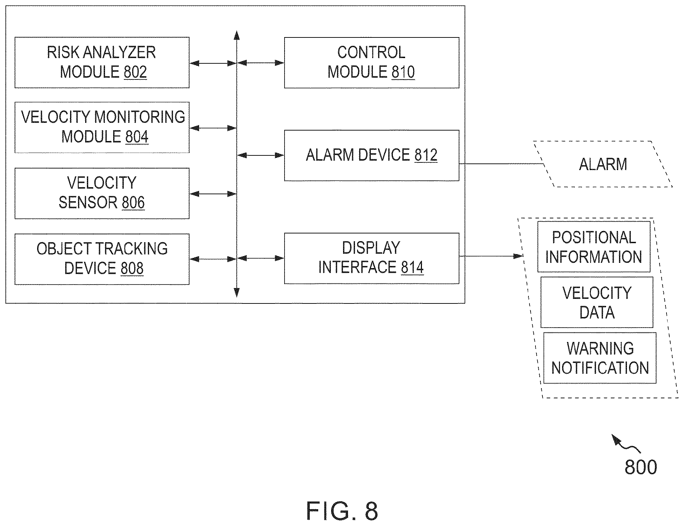

FIG. 8 represents a simplified block diagram representation of a collision alarm apparatus, in accordance with another embodiment of the present disclosure;

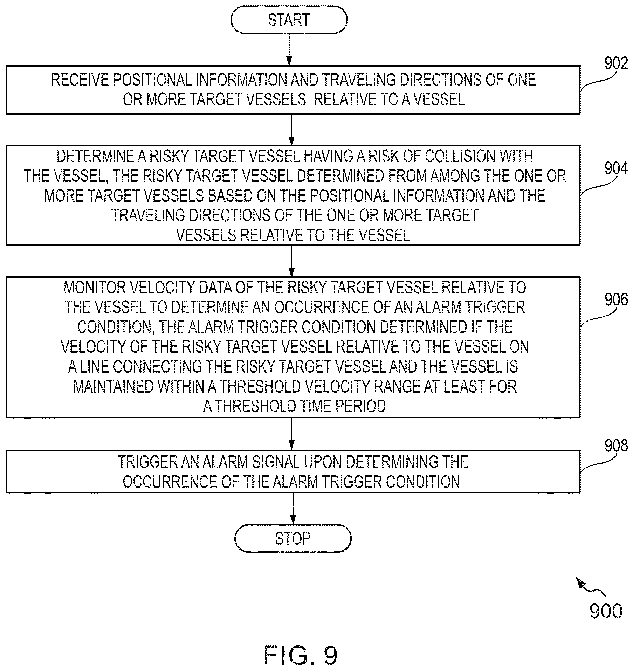

FIG. 9 illustrates a flow diagram of a method for providing an alarm to prevent collision between the vessels, in accordance with an embodiment of the present disclosure;

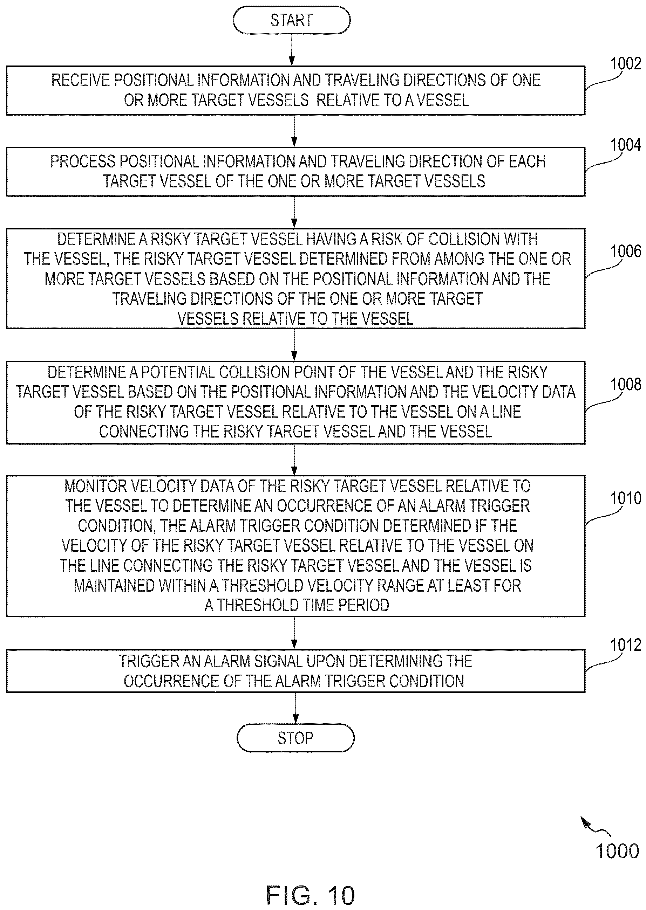

FIG. 10 illustrates a flow diagram of a method for providing an alarm to prevent collision between the vessels, in accordance with another embodiment of the present disclosure; and

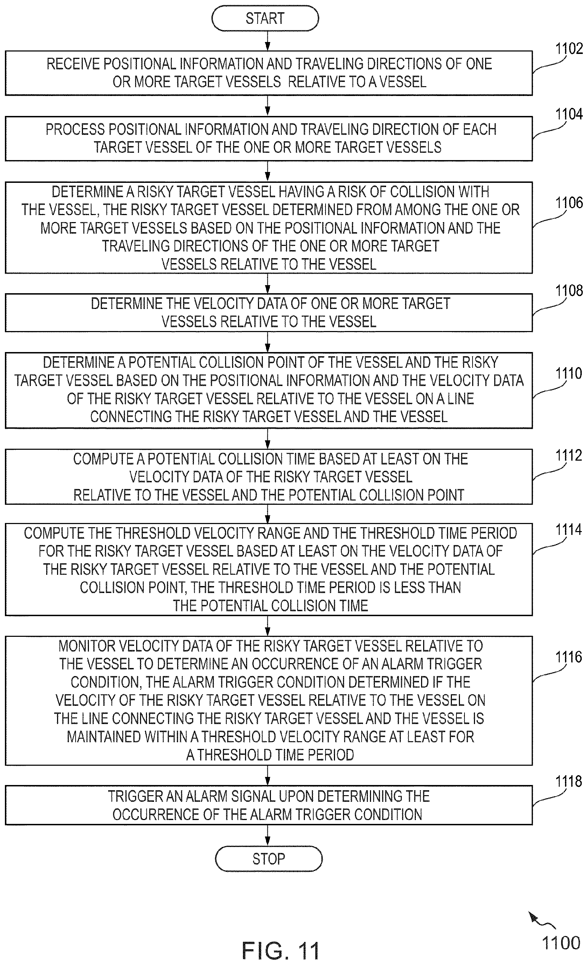

FIG. 11 illustrates a flow diagram of a method for providing an alarm to prevent collision between the vessels, in accordance with another embodiment of the present disclosure.

The drawings referred to in this description are not to be understood as being drawn to scale except if specifically noted, and such drawings are only exemplary in nature.

## DETAILED DESCRIPTION OF THE INVENTION

In the following description, for purposes of explanation, numerous specific details are set forth in order to provide a thorough understanding of the present disclosure. It will be apparent, however, to one skilled in the art that the present disclosure can be practiced without these specific details. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments described herein. Accordingly, the examples should not be construed as limiting the scope of the embodiments herein.

Reference in this specification to "one embodiment" or "an embodiment" means that a particular feature, structure, or characteristic described in connection with the embodiment is included in at least one embodiment of the present disclosure. The appearances of the phrase "in an embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not for other embodiments.

Moreover, although the following description contains many specifics for the purposes of illustration, anyone skilled in the art will appreciate that many variations and/or alterations to said details are within the scope of the present disclosure. Similarly, although many of the features of the present disclosure are described in terms of each other, or in conjunction with each other, one skilled in the art will appreciate that many of these features can be provided independently of other features. Accordingly, this description of the present disclosure is set forth without any loss of generality to, and without imposing limitations upon, the present disclosure.

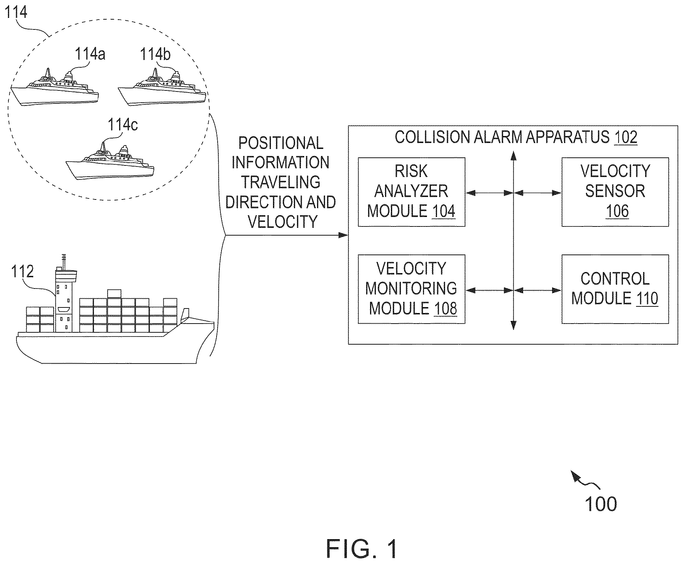

Various embodiments of the present disclosure provide a collision alarm apparatus in a vessel and a method incorporated therein for accurately determining the potential risk of collision between the vessel with other target vessels and providing an alarm signal for preventing the collision. The apparatus accurately determines one or more risky target vessels from among a plurality of target vessels in the vicinity of the vessel, where the one or more risky target vessels may have a risk of collision with the vessel. The apparatus further detects if there is an occurrence of an alarm trigger condition. The alarm trigger condition is determined to have occurred if the risky target vessel (e.g., a give-way vessel) has not taken any collision-avoidance action based on pre-defined regulations to prevent collision with the vessel (e.g., a stand-on vessel). In an event of the risky target vessel not taking any collision-avoidance action, the apparatus raises an alarm to the vessel to take necessary steps. Various embodiments of the present disclosure are described hereinafter with reference to FIG. 1 to FIG. 11.

FIG. 1 illustrates an example representation of an environment 100 related to at least some example embodiments of the present disclosure. The environment 100 depicts a collision alarm apparatus 102. The collision alarm apparatus 102 (hereinafter interchangeably referred to as 'the apparatus 102' for the sake of brevity) is equipped onboard a watercraft (e.g., a vessel 112) configured to sail in water bodies (e.g., sea). Alternatively, at least some part of the apparatus 102 may be associated with a communication base station and can be communicably coupled to the vessel 112 either through wired or wireless communication. The apparatus 102 may include one or more components configured to detect objects (either in static or dynamic state) present within the immediate surroundings (or in the vicinity) of the vessel 112 and determine one or more parameters associated with the detected objects.

The one or more components of the apparatus 102 include a risk analyzer module 104, a velocity sensor 106, a velocity monitoring module 108, and a control module 110. In an embodiment, at least one of the risk analyzer module 104, the velocity sensor 106, the velocity monitoring module 108, and the control module 110 may include at least one processor and memory (not shown for the sake of brevity). The memory may be capable of storing executable instructions, whereas the processor may be capable of executing instructions to perform the operations described herein. The memory may include suitable logic, circuitry, and/or interfaces to store a set of computer-readable instructions for performing operations described herein. In an embodiment, the memory may be embodied as one or more volatile memory devices, one or more non-volatile memory devices, and/or a combination of one or more volatile memory devices and non-volatile memory devices. Examples of the memory include a random-access memory (RAM), a read-only memory (ROM), a removable storage drive, and the like. The processor may be embodied in a number of different ways. The processor may be embodied as a multi-core processor, a single-core processor; or a combination of multi-core processors and single-core processors. For example, the processor may be embodied as one or more of various processing means such as a coprocessor, a microprocessor, a controller, a digital signal processor (DSP), processing circuitry with or without an accompanying DSP, or various other processing devices including integrated circuits such as, for example, an application-specific integrated circuit (ASIC), a field-programmable gate array (FPGA), a microcontroller unit (MCU), a hardware accelerator, a special-purpose computer chip, or the like. In an example embodiment, the multi-core processor may be configured to execute instructions that can be accessible to the processor. Alternatively or additionally, the processor may be configured to execute hard-coded functionality. As such, whether configured by hardware or software methods, or by a combination thereof, the processor may represent one or more entities (e.g., the risk analyzer module 104, the velocity sensor 106, the velocity monitoring module 108, or the control module 110), for example, physically embodied in circuitry, capable of performing operations according to various embodiments while configured accordingly.

In the preferred embodiment, the apparatus 102 receives positional information and traveling directions of one or more target vessels 114 relative to the vessel 112. The target vessels 114 are the vessels present in the vicinity of the vessel 112, and these are representatively shown as a target vessel 114a, a target vessel 114b, and a target vessel 114c in the environment 100 however, the number of target vessels 114 may be more or less than what is represented by FIG. 1 as well. Further, the vessel 112 may include one or more object tracking devices (e.g., radio detection and ranging (RADAR) device) configured to detect the objects (such as, the target vessels 114) present within a predetermined area of the vessel 112. The predetermined area corresponds to the operating range of the object tracking device within which the object tracking device can perform its tracking functionality reliably. This operating range is generally limited based on factors such as, but not limited to, power, size, weather conditions, atmospheric interference, etc., among other suitable limitations. In an example, the predetermined area can be set to a fixed area surrounding the vessel 112 within the operating range of the object tracking device. This fixed area can be decided by the captain or operator of the vessel 112. In one non-limiting example, an average fixed area surrounding the vessel 112 may be set to be 6 nautical miles. Thereafter, the object tracking devices may locate the objects (i.e., the target vessels 114) in the fixed area of up to 6 nautical miles. The apparatus 102 accesses the positional information and the traveling directions of the target vessels 114 relative to the vessel 112 from object tracking devices for locating the target vessels 114. In some forms, the apparatus 102 may include the object tracking devices for detecting and locating the target vessels 114, whereas in some other forms, the object tracking devices may be present externally with respect to the apparatus 102 and/or the vessel 112 such that object tracking devices may be communicably linked with the apparatus 102 and/or the vessel 112 through wired or wireless communication.

The risk analyzer module 104 receives the positional information and the traveling directions of the one or more target vessels 114 relative to the vessel 112. The risk analyzer module 104 identifies a vessel among the target vessels 114 that has a potential risk of collision with the vessel 112 based, at least on, processing the positional information and the traveling directions of each of the target vessels 114. In other words, the risk analyzer module 104 discriminates at least one target (i.e., the risky target vessel such as target vessel 114a) having a risk of collision with the vessel 112 based on the positional information and the traveling direction. In an example, the risk analyzer module 104 may determine if any of the one or more target vessels 114 are on a collision course with the vessel 112. This determination may be done by checking if any of the one or target vessels 114 is traveling on a course that lies in either the heading or moving direction of the vessel 112. For instance, the target vessel 114a among the target vessels 114 may be identified as the vessel having the risk of collision with the vessel 112. The target vessel 114a is hereinafter interchangeably referred to as the 'risky target vessel 114a'.

Further, the velocity sensor 106 is configured to detect the radial velocity of the objects (either in motion or static state). For description purposes, the objects are represented as the one or more target vessels 114. The velocity sensor 106 detects the velocity data of the one or more target vessels 114 relative to the vessel 112. More specifically, the velocity sensor 106 detects the velocity data of the target vessels 114 relative to the vessel 112 on an imaginary or computed line connecting the vessel 112 and each of the one or more target vessels 114. In an embodiment, the velocity sensor 106 measures or detects the relative velocity (i.e., the radial velocity) of the target vessels 114 based on analyzing the frequency and wavelength shift of a reflected radio frequency (RF) wave being intercepted by each of the target vessels 114. Without limiting the scope of the present disclosure, the velocity sensor 106 is a Doppler velocity sensor. For instance, the velocity sensor 106 may utilize the Doppler effect to detect the velocity data of each of the target vessels 114 with respect to the vessel 112. As may be understood, the term "Doppler effect" refers to a phenomenon that is observed whenever the source of waves is moving with respect to an observer. Using the Doppler effect, the speed and direction of the motion of one or more target vessels 114 may be determined in a particular direction along the radius of the imaginary sphere (or within the predetermined area) around the vessel 112. In other words, the Doppler effect facilitates frequency shifts (referred to as 'Doppler shifts') which facilitates the determination of the velocity data of the target vessels 114.

Additionally, the velocity sensor 106 may include a moving target indicator (MTI) that utilizes the frequency shifts for discriminating the moving targets (e.g., the target vessels 114) and the stationary objects (e.g., reefs or icebergs). It is noted that the frequency shifts of the stationary objects include a minor spectral spreading around zero frequency. The velocity sensor 106 may detect the velocity of the vessel 112. Specifically, the velocity sensor 106 may include a transducer (not shown in figures for the sake of brevity) fitted onboard the vessel 112. In an example, the transducer may transmit a beam of acoustic wave at a predefined angle to the keel (bottom-most longitudinal structural element on the vessel 112) and receive the acoustic wave reflected from the one or more target vessels 114. The velocity sensor 106 detects the velocity of the vessel 112 based on analyzing the frequency shifts between the transmitted and received acoustic waves.

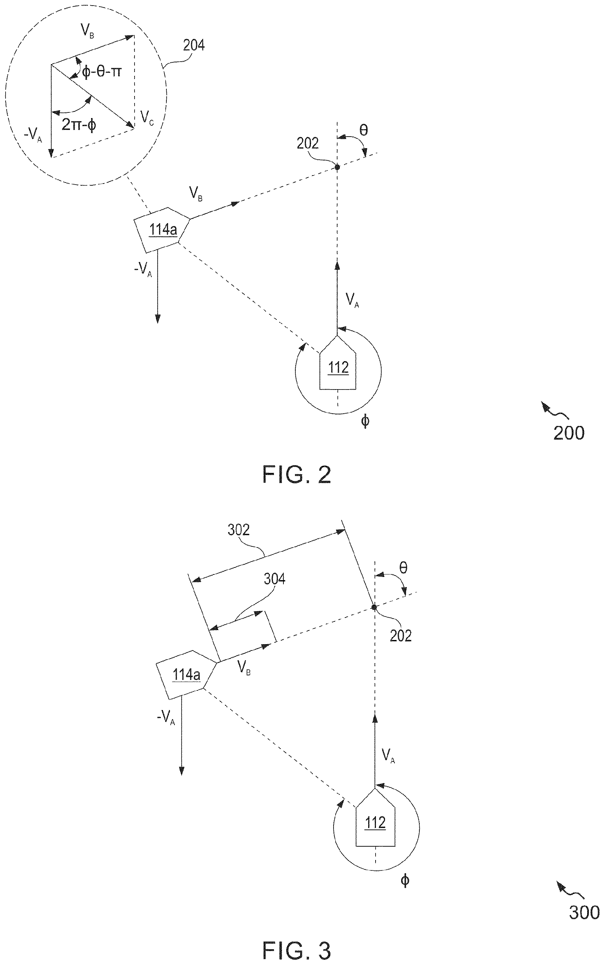

Further, the risk analyzer module 104 is configured to determine a potential collision point (*see,* potential collision point 202 in FIG. 2) between the vessel 112 and the risky target vessel 114a based on the positional information and the velocity data of the risky target vessel 114a relative to the vessel 112 in the traveling direction. The velocity monitoring module 108 is configured to monitor the velocity data of the risky target vessel 114a relative to the vessel 112 on a line connecting the risky target vessel 114a and the vessel 112 to determine the occurrence of the alarm trigger condition. More specifically, the velocity monitoring module 108 monitors the change in magnitude of the velocity data of the risky target vessel 114a relative to the vessel 112 for a threshold time period upon identifying the risky target vessel 114a. In other words, the velocity monitoring module 108 monitors the velocity data of the risky target vessel 114a to determine if the risky target vessel 114a has taken any avoidance action such as, performing a course correction, within a predetermined distance before the potential collision. The velocity monitoring module 108 determines that an alarm should be triggered if the velocity of the risky target vessel 114a relative to the vessel 112 is maintained within a threshold velocity range at least for the threshold time period. Moreover, the velocity monitoring module 108 may analyze velocity vectors associated with the velocity data of the risky target vessel 114a and the vessel 112 for determining the alarm trigger condition which will be explained further in detail with reference to FIG. 2 to FIG. 5. In an embodiment, the velocity monitoring module 108 may determine the occurrence of the alarm trigger condition based on monitoring the velocity data of the risky target vessel 114a at a plurality of time instants within the threshold time period which will be explained further in the present disclosure.

The velocity monitoring module 108 may provide a control signal to the control module 110, upon determining the alarm trigger condition. To that effect, the control module 110 triggers an alarm signal (e.g., audible or visual signal) to notify the vessel 112 and/or the risky target vessel 114a about the risk of collision. It should be understood that the positional information alone may not be sufficient in determining the avoidance action, as the avoidance action may take place if either of the vessels changes their traveling direction, or either accelerate or decelerate in the same traveling direction. Therefore, the present disclosure utilizes the relative velocity of the vessels in the traveling directions, and the positional information to determine the avoidance action thus, by providing accurate information to the operator or captain of the vessel 112 and the target vessels 114, the approach of the present disclosure improves the probability of collision avoidance.

Further, in an embodiment, the risk analyzer module 104 is configured to determine whether the vessel 112 has performed the avoidance action, in case of the object is in stationary state (e.g., natural features such as a reef or an iceberg). In this scenario, the velocity monitoring module 108 monitors the velocity, the traveling direction, and the positional information of the vessel 112 to determine if the vessel 112 has taken the avoidance action within the threshold time period to prevent the potential collision from taking place. The risk analyzer module 104 determines the alarm trigger condition and the control module 110 triggers the alarm signal, if the vessel 112 has not taken the avoidance action within the threshold time period.

FIG. 2 represents a velocity vector graph 200 depicting a relation between velocity data of the risky target vessel 114a and the vessel 112, in accordance with an embodiment of the present disclosure. As shown, the velocity vector graph 200 is depicted to include velocity vectors (represented as '$V_A$', and '$V_B$') associated with velocity data of the vessel 112 and the risky target vessel 114a, respectively. The velocity vectors $V_A$, and $V_B$ provide information related to the traveling direction and the moving speed of the vessel 112 and the risky target vessel 114a. Further, the velocity vector graph 200 is depicted to include the potential collision point 202 determined based on the positional information and the velocity vectors $V_A$, and $V_B$ associated the vessel 112 and the risky target vessel 114a, respectively.

The velocity vectors $V_A$ and $V_B$ of the vessel 112 and the risky target vessel 114a, respectively, form an angle θ at the point of intersection (*i.e.,* the potential collision point 202). Further, the relative azimuth of the risky target vessel 114a with respect to the velocity vector $V_A$ forms an angle φ. To that effect, the vessel 112 and the risky target vessel 114a traveling in the same direction without changing the angle φ within the threshold time period indicates that there is a risk of collision between the vessel 112 and the risky target vessel 114a at the potential collision point 202.

More specifically, a resultant vector (represented as '$V_C$') is determined with reference to the velocity vectors $V_A$, and $V_B$ to analyze the change in magnitude of the velocity data of the risky target vessel 114a and the vessel 112 (*see,* representation 204 of FIG. 2). As shown, the velocity vector $V_A$ is depicted in a negative direction (represented as -$V_A$) for computing the resultant vector $V_C$. The change in magnitude of the resultant vector $V_C$ is dependent on the avoidance maneuver (or action) taken by the risky target vessel 114a or the vessel 112 in case of a potential collision scenario. The mathematical relation between the resultant vector $V_C$ and the velocity vectors $V_A$ and $V_B$ is explained using the below equation (Eq. 1):

$$|V_C| = |V_A| \cos(2\pi - \phi) + |V_B| \cos(\phi - \theta - \pi) \ldots\ldots\ldots (Eq.\ 1)$$

$$0 < 2\pi - \phi < \pi/2;$$

and

$$0 < \phi - \theta - \pi < \pi/2.$$

In one example scenario, the measure of angle $\theta$ may increase due to avoidance action taken by the risky target vessel 114a *(e.g.,* the risky target vessel 114a turns the rudder to starboard to avoid collision with the stern of the vessel 112). In this scenario, the magnitude of the resultant vector $V_C$ increases due to an increase in the angle $\theta$. In another example scenario, the risky target vessel 114a may decelerate to avoid a collision. In this scenario, the velocity vector $V_B$ decreases, and hence, the magnitude of the resultant vector $V_C$ also decreases, thus indicating the occurrence of avoidance action. It is to be noted that the velocity monitoring module 108 is configured to perform an analysis of the resultant vector $V_C$ to determine the occurrence of the alarm trigger condition.

FIG. 3 represents a velocity vector graph 300 depicting a potential collision time 302 and a threshold time period 304, in accordance with an embodiment of the present disclosure. The risk analyzer module 104 is configured to compute the potential collision time 302 based at least on the velocity data of the risky target vessel 114a relative to the vessel 112 and the potential collision point 202. Further, the risk analyzer module 104 determines whether or not the risky target vessel 114a has taken the avoidance action within the potential collision time 302. The potential collision time 302 indicates the time of occurrence of the potential collision between the vessel 112 and the risky target vessel 114a.

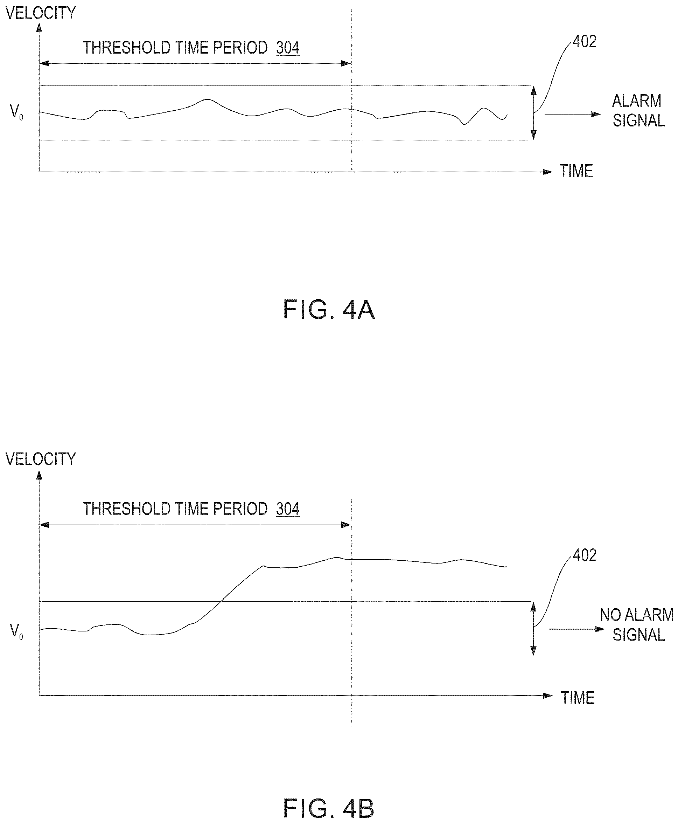

In addition, the risk analyzer module 104 computes a threshold velocity range (*see,* 402 of FIG. 4A and FIG. 4B) for the risky target vessel 114a. More specifically, the risk analyzer module 104 receives the data related to the velocity data of the risky target vessel 114a relative to the vessel 112 being monitored by the velocity monitoring module 108 on the imaginary line connecting between the risky target vessel 114a and the vessel 112, and the potential collision point 202. In an example, this imaginary line may be established by the risk analyzer module 104 such that this line connects the vessel 112 with the risky target vessel 114a while tracing a possible collision path. Thereafter, the risk analyzer module 104 determines the threshold velocity range 402 based on the data received from the velocity monitoring module 108. As shown in FIG. 3, the threshold time period 304 is less than the potential collision time 302. In an example, threshold time period 304 may be determined such that, even if no avoidance action is made by the risky target vessel 114a there remains an ample time for the vessel 112 to make an avoidance action on its own before reaching the potential collision time 302 thereby, enabling the vessel 112 to avoid the potential collision scenario. In a non-limiting example, a start time of the potential collision time 302 and/or the threshold time period 304 may be the timing at which the velocity sensor 106 detects the velocity data of the risky target vessel 114a or the timing at which the risk analyzer module 104 identifies the risky target vessel 114a among the target vessels 114. Furthermore, the threshold velocity range 402 may be in the range of about 2∆V, wherein V may be a pre-defined constant value or can be selected based on factors such as velocity data of the risky target vessel 114a and/or the vessel 112. In order to enhance safety, it is preferable not only to shorten the potential collision time, but also to shorten the avoidance time necessary to secure the motion performance of the cooperative action vessel, the surrounding tidal current, and the distance to be separated from the potential collision point.

The velocity monitoring module 108 monitors the velocity of the risky target vessel 114a relative to the vessel 112 in the traveling direction for the threshold time period 304 to determine the occurrence of the avoidance action within the threshold time period 304 for preventing a potential collision. It should be noted that the avoidance action is to be taken by the risky target vessel 114a based on the regulations provided by the Convention on the International Regulations for Preventing Collisions at Sea (COLREGs). The risk analyzer module 104 may be provided and/or trained with the inputs related to the rules defined in the COLREGs for monitoring the parameters (such as velocity, direction, and positional information) of the vessels, and upon determining the potential of a collision between the vessels, it can facilitate triggering of the alarm signal.

In one scenario, the velocity monitoring module 108 determines the alarm trigger condition, if the velocity of the risky target vessel 114a relative to the vessel 112 is maintained within the threshold velocity range 402 (*i.e.,* 2∆V) for the threshold time period 304. In this scenario, the velocity monitoring module 108 transmits the command signal to the control module 110 after the lapse of the threshold time period 304. In response to the command signal, the control module 110 triggers the alarm signal (as shown in FIG. 4A). For example, if the velocity data of the risky target vessel 114a relative to the vessel 112 indicates that the relative velocity is about 5 knots, and the potential collision time and the threshold time period are determined to be 10 minutes and 4 minutes, respectively. Further, the threshold velocity range 402 of 2ΔV may be in the range of about 7 knots or 3 knots. The velocity monitoring module 108 determines if the magnitude of the relative velocity of the risky target vessel 114a with respect to the vessel 112 goes beyond either the upper velocity range (7 knots) or the lower velocity range (3 knots) of the threshold velocity range 402 within the threshold time period 304 of 4 minutes. In this illustrative example, if the magnitude of the velocity is determined to be within the range of about 7 knots to 3 knots (defined in the threshold velocity range 402) even after the lapse of threshold time 302 of 4 minutes, then it is determined that the risky target vessel 114a has not taken any avoidance action. In such scenario, the alarm signal is triggered as explained above.

In another scenario, the velocity monitoring module 108 does not transmit the control signal to the control module 110, if the velocity of the risky target vessel 114a relative to the vessel 112 deviates (either increase or decrease) from the threshold velocity range 402 (*i.e.,* 2ΔV) within the threshold time period 304. Such deviation suggests that an avoidance action has been taken by the risky target vessel 114a.

FIG. 5 represents a graph 500 for monitoring the velocity data associated with the risky target vessel 114a relative to the vessel 112 at multiple timestamps, in accordance with an embodiment of the present disclosure. As shown, the graph 500 is depicted to include a plurality of time instants 502 (collectively referred for T1, T2, and T3). The plurality of time instants 502 may be predefined within the threshold time period 304. The interval between each of the time instants 502 T1, T2, and T3 may be equal (*i.e.,* T2-T1 = T3-T2 ). In this scenario, the velocity monitoring module 108 monitors the velocity data of the risky target vessel 114a at each of the plurality of time instants 502 defined within the threshold time period 304 to determine the occurrence of the alarm trigger condition. Alternatively, the velocity monitoring module 108 may analyze the traveling direction and the velocity in the traveling direction of the risky target vessel 114a at each of the time instants 502 to determine if the risky target vessel 114a has taken any avoidance action. Thereafter, the velocity monitoring module 108 facilitates the control module 110 to trigger the alarm signal, if the velocity data of the risky target vessel 114a relative to the vessel 112 is maintained within the threshold velocity range 402 upon the lapse of the threshold time period 304.

In an alternate embodiment, the plurality of time instants 502 may be defined within an intermediate time period of the potential collision time 302. The intermediate time period may exceed the threshold time period 304 and be defined within the potential collision time 302. In this scenario, the velocity monitoring module 108 is able to monitor the velocity data of the risky target vessel 114a even upon the lapse of the threshold time period 304 for determining if the risky target vessel 114a has taken any avoidance action post the alarm signal.

FIG. 6 illustrates a simplified block diagram representation of a collision alarm apparatus 600, in accordance with an embodiment of the present disclosure. The collision alarm apparatus 600 (hereinafter interchangeably referred to as 'the apparatus 600') may be equipped in the vessel 112 and configured to provide an alarm in case of the onset of the alarm trigger condition. The apparatus 600 includes one or more components such as a risk analyzer module 602, a velocity monitoring module 604, a velocity sensor 606, an object tracking device 608, and a control module 610. Further, the risk analyzer module 602, the velocity monitoring module 604, the velocity sensor 606, and the control module 610 are analogous to the risk analyzer module 104, the velocity sensor 106, the velocity monitoring module 108, and the control module 110, respectively. Furthermore, the functionality associated with the above-mentioned components is already explained in detail with reference to FIGS. 1-5, and therefore they are not described again for the sake of brevity.

Further, the object tracking device 608 is configured to determine the positional information of the one or more target vessels 114 in the vicinity of the vessel 112. For example, the object tracking device 608 may be a Doppler radar. Typically, the objecting tracking device 606 is an electromagnetic system configured to detect the positional information of the objects (e.g., the target vessels 114). The positional information includes the location (or coordinates) of an object and the distance of the object from the point of the objecting tracking device 606 (*i.e.,* the Doppler radar). In an embodiment, the object tracking device 608 may be embodied within the velocity sensor 606 or vice versa. In at least one embodiment in which these are embodied as separate components, the object tracking device 606 may also provide the tracking information related to the target vessels 114 to the velocity sensor 606.

In a non-limiting example, the object tracking device 608 is configured to transmit electromagnetic waves (radio waves) within a predetermined area of the vessel 112. The predetermined area corresponds to the target range of the object tracking device 608. Typically, the electromagnetic waves radiated from the object tracking device 608 propagate in an arcuate manner (or curved manner) due to diffraction within a fluid environment (such as a marine environment). The degree of diffraction may depend on the atmosphere density. Thereafter, the object tracking device 608 receives the electromagnetic waves that are intercepted or reflected from the objects (e.g., the target vessels 114 and the stationary objects like natural features) located in the predetermined area of the vessel 112 or the target range of the object tracking device 608. Specifically, the object tracking device 608 may include an antenna for radiating and receiving the electromagnetic waves within the predetermined area of the vessel 112. The object tracking device 608 is configured to locate the objects (e.g., the target vessels 114) present within the predetermined area of the vessel 112 based on receipt of the electromagnetic waves being intercepted by the target vessels 114. Moreover, the object tracking device 608 is configured to determine the coordinates of the target vessels 114 and the distance between the vessel 112 and each of the target vessels 114. The distance between the vessel 112 and the object *(e.g.,* the risky target vessel 114a) is computed based on the time measured between the transmission and receipt of the electromagnetic waves.

Additionally, the object tracking device 608 *(i.e.,* the Doppler radar) may be configured to detect the radial velocity of the one or more target vessels 114 or the risky target vessel 114a in the traveling direction of the vessel 112. Similar to the velocity sensor 106, the object tracking device 608 uses the Doppler effect to measure the Doppler shifts to detect the radial velocity (or the velocity data of risky target vessel 114a relative to the vessel 112). For example, the Doppler radar *(i.e.,* the object tracking device 608) may be coherent Pulsed Doppler radar, continuous wave (CW) Doppler radar, Frequency Modulated-continuous wave (FM-CW) radar, and the like. As such, implementing the Doppler effect in the object tracking device 608 facilitates accurate determination of the relative velocity between the risky target vessel 114a and the vessel 112. Further, this results in accurate determination of other parameters such as the potential collision point 202, the potential collision time 302, and the like, thereby enabling precise tracking of the occurrence of the avoidance action.

The information (positional information, the traveling directions, and the velocity data) detected by the object tracking device 608 is accessed by the risk analyzer module 602. In an embodiment, the object tracking device 608 may be configured to transmit the velocity data of the risky target vessel 114a or the one or more target vessels 114 relative to the vessel 112 to the velocity sensor 106. In another embodiment, the velocity sensor 106 may be configured to determine the positional information of each of the one or more target vessels 114 based at least on the Doppler effect as explained with reference to the Doppler radar *(i.e.,* the object tracking device 608).

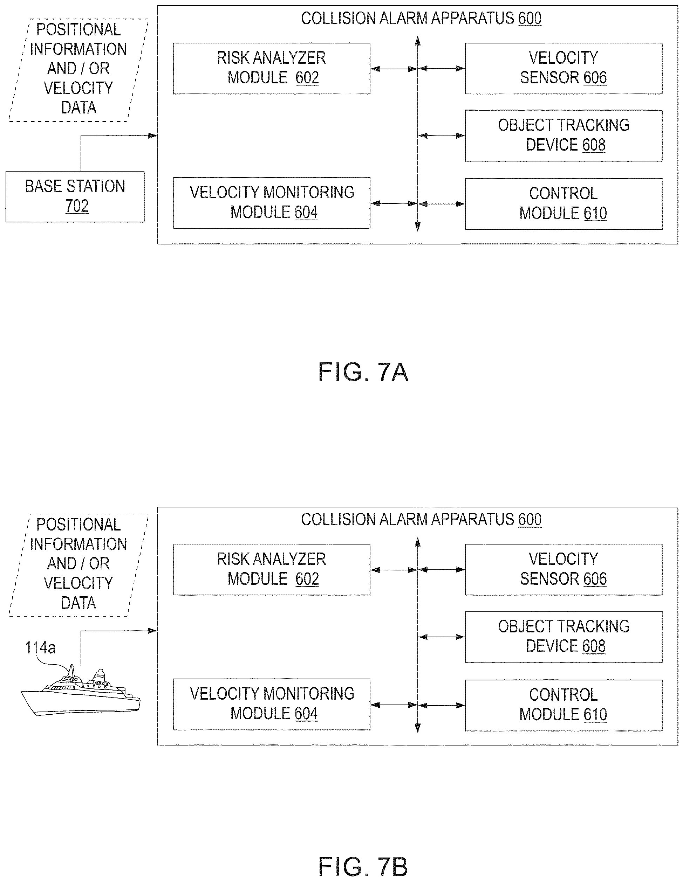

In an embodiment, the apparatus 600 may receive at least one of the positional information and the velocity data of the risky target vessel 114a from a base station 702 (as shown in FIG. 7A). The base station 702 is a communication station that may include, for example, a 5G New Radio (NR) communication antenna, a Long-Term Evolution (LTE) communication antenna, other radio communication antennas, or a synchronous orbit communication satellite, etc., among other suitable communication apparatus. The communication network associated with the base station 702 facilitates communication between the base station and the vessels *(i.e.,* the vessel 112 and the one or more target vessels 114), and it also enables the communication between the vessel 112 and the one more target vessels 114. The base station 702 may access at least the positional information, the traveling direction, and the velocity data of the risky target vessel 114a relative to the vessel 112. Further, the base station 702 transmits the positional information, the traveling direction, and the velocity data of the risky target vessel 114a relative to the vessel 112 to the risk analyzer module 602.

In one embodiment, the apparatus 600 may receive at least one of the positional information and the velocity data of the risky target vessel 114a from the risky target vessel 114a (as shown in FIG. 7B). The risky target vessel 114a may include an apparatus (not shown in figures for sake of brevity) similar to the apparatus 102 or the apparatus 600 for detecting its positional information and velocity data. Further, the risky target vessel 114a may communicate with the vessel 112 using marine communication services, thereby allowing transmission of the positional information and the velocity data to the vessel 112 based on receipt of a request from the vessel 112.

FIG. 8 represents a simplified block diagram representation of a collision alarm apparatus 800, in accordance with an embodiment of the present disclosure. The collision alarm apparatus 800 (hereinafter interchangeably referred to as 'the apparatus 800') may be equipped in the vessel 112. The apparatus 800 includes one or more components such as a risk analyzer module 802, a velocity monitoring module 804, a velocity sensor 806, an object tracking device 808, a control module 810, an alarm device 812, and a display interface 814. Further, the risk analyzer module 802, the velocity monitoring module 804, the velocity sensor 806, the object tracking device 808, and the control module 810 are similar to the risk analyzer module 602 or 104, the velocity monitoring module 604 or 108, the object tracking device 608, and the control module 610, respectively. Furthermore, the functionality associated with the above-mentioned components is already explained in detail with reference to FIGS. 1-6, and therefore they are not described again for the sake of brevity.

The risk analyzer module 802 facilitates the control module 810 to trigger an alarm signal based on determining the alarm trigger condition. The alarm signal operates the alarm device 812 to raise an alarm to the vessel 112 and/or the risky target vessel 114a. In one embodiment, the alarm device 812 may include high-frequency speaker systems configured to produce alarm in the form of high audio frequency sounds in case of determining the alarm trigger condition. In another embodiment, the alarm device 812 may include a light source configured to provide an alarm by emitting light onto the opposing vessel (the risky target vessel 114a) in a unique pattern (e.g., Morse code) in case of the alarm trigger condition. The alarm device 812 may include an audio-visual alarm sequencer or any other marine alarm system as per feasibility and requirement. In some other examples, the alarm device 812 may include suitable components for vibrating a device, or blowing air on a user's face, in response to receipt of the alarm signal. Instead of, or in addition to, a trigger that emits auditory audio or visual light, the alarm signal may be a trigger that transmits a steering control signal to the steering system in a direction to avoid collision.

Further, the display interface 814 is configured to display at least the positional information, the traveling direction, and the velocity data of the risky target vessel 114a relative to the vessel 112 on an electronic display. In an embodiment, the display interface 814 also displays a warning notification upon determining the alarm trigger condition. The warning notification may indicate that the risky target vessel 114a has not taken any avoidance action within the threshold time period 304.

FIG. 9 illustrates a flow diagram of a method 900 for providing an alarm to prevent collision between the vessels, in accordance with an embodiment of the present disclosure. Operations of the flow diagram of the method 900, and combinations of the operations in the flow diagram of the method 900, may be implemented by, for example, hardware, firmware, a processor, circuitry, and/or a different device associated with the execution of software that includes one or more computer program instructions. The sequence of operations of the method 900 may not be necessarily executed in the same order as they are presented. Further, one or more operations may be grouped and performed in the form of a single step, or one operation may have several sub-steps that may be performed in parallel or a sequential manner. The method 900 starts at operation 902.

At operation 902, the method 900 includes receiving positional information and traveling directions of one or more target vessels 114 relative to the vessel 112. As explained above, the object tracking device 608 is configured to determine the positional information and the traveling directions of the one or more target vessels 114 relative to the vessel 112 based on the Doppler effect.

At operation 904, the method 900 includes determining a risky target vessel 114a having a risk of collision with the vessel 112. The risky target vessel 114a is determined from among the one or more target vessels 114 based on the positional information and the traveling directions of the one or more target vessels 114 relative to the vessel 112. As explained above, the risk analyzer module 104 is configured to analyze the positional information and the traveling direction of each of the one or more target vessels 114 and determine the risky target vessel 114a among the one or more target vessels 114.

At operation 906, the method 900 includes monitoring velocity data of the risky target vessel 114a relative to the vessel 112 to determine an occurrence of an alarm trigger condition. The alarm trigger condition is determined if the velocity of the risky target vessel 114a relative to the vessel 112 on a line connecting the risky target vessel 114a and the vessel 112 is maintained within a threshold velocity range 402 at least for a threshold time period 304. As may be understood, the line described in this operation is an imaginary line that traces the collision course between two vessels. As explained above, the velocity monitoring module 108 is configured to monitor the velocity data of the risky target vessel 114a relative to the vessel 112 once the risky target vessel 114a is identified among the target vessels 114. Specifically, the velocity monitoring module 108 monitors the velocity data of the risky target vessel 114a for the threshold time period 304 to determine if any avoidance action has been taken by the risky target vessel 114a to avoid collision. Moreover, determining the avoidance action corresponds to determining the alarm trigger condition as explained above.

At operation 908, the method 900 includes triggering an alarm signal upon determining the occurrence of the alarm trigger condition. As explained above, the risk analyzer module 104 transmits the alarm signal to the control module 110 based on determining that the alarm trigger condition is met.

FIG. 10 illustrates a flow diagram of a method 1000 for providing an alarm to prevent collision between the vessels, in accordance with another embodiment of the present disclosure. The sequence of operations of the method 1000 may not be necessarily executed in the same order as they are presented. Further, one or more operations may be grouped and performed in the form of a single step, or one operation may have several sub-steps that may be performed in parallel or a sequential manner. The method 1000 starts at operation 1002.

At operation 1002, the method 1000 includes receiving positional information and traveling directions of one or more target vessels 114 relative to a vessel 112.

At operation 1004, the method 1000 includes processing positional information and traveling direction of each target vessel (e.g., target vessel 114a, target vessel 114b, and target vessel 114c) of the one or more target vessels 114.

At operation 1006, the method 1000 includes determining a risky target vessel 114a having a risk of collision with the vessel 112. The risky target vessel 114a is determined from among the one or more target vessels 114 based on the positional information and the traveling directions of the one or more target vessels 114 relative to the vessel 112.

At operation 1008, the method 1000 includes determining a potential collision point 202 of the vessel 112 and the risky target vessel 114a based on the positional information and the velocity data of the risky target vessel 114a relative to the vessel 112 on the line connecting the risky target vessel 114a and the vessel 112.

At operation 1010, the method 1000 includes monitoring velocity data of the risky target vessel 114a relative to the vessel 112 to determine an occurrence of an alarm trigger condition. The alarm trigger condition is determined if the velocity of the risky target vessel 114a relative to the vessel 112 on a line connecting the risky target vessel 114a and the vessel 112 is maintained within a threshold velocity range 402 at least for a threshold time period 304.

At operation 1012, the method 1000 includes triggering an alarm signal upon determining the occurrence of the alarm trigger condition. Further, operations 1002 to 1014 are already explained with reference to FIGS. 1-9, and therefore they are not reiterated again for the sake of brevity.

FIG. 11 illustrates a flow diagram of a method 1100 for providing an alarm to prevent collision between the vessels, in accordance with another embodiment of the present disclosure. The sequence of operations of the method 1100 may not be necessarily executed in the same order as they are presented. Further, one or more operations may be grouped and performed in the form of a single step, or one operation may have several sub-steps that may be performed in parallel or a sequential manner. The method 1100 starts at operation 1102.

At operation 1102, the method 1100 includes receiving positional information and traveling directions of one or more target vessels 114 relative to a vessel 112.

At operation 1104, the method 1100 includes processing positional information and traveling direction of each target vessel of the one or more target vessels 114.

At operation 1106, the method 1100 includes determining a risky target vessel 114a having a risk of collision with the vessel 112. The risky target vessel 114a is determined from among the one or more target vessels 114 based on the positional information and the traveling directions of the one or more target vessels 114 relative to the vessel 112.

At operation 1108, the method 1100 includes determining the velocity data of one or more target vessels 114 relative to the vessel 112.

At operation 1110, the method 1100 includes determining a potential collision point 202 of the vessel 112 and the risky target vessel 114a based on the positional information and the velocity data of the risky target vessel 114a relative to the vessel 112 on the line connecting the risky target vessel 114a and the vessel 112.

At operation 1112, the method 1100 includes computing a potential collision time 302 based at least on the velocity data of the risky target vessel 114a relative to the vessel 112 and the potential collision point 202.

At operation 1114, the method 1100 includes computing the threshold velocity range 402 and the threshold time period 304 for the risky target vessel 114a based at least on the velocity data of the risky target vessel 114a relative to the vessel 112 and the potential collision point 202. The threshold time period 304 is less than the potential collision time 302.

At operation 1116, the method 1100 includes monitoring velocity data of the risky target vessel 114a relative to the vessel 112 to determine an occurrence of an alarm trigger condition. The alarm trigger condition is determined if the velocity of the risky target vessel 114a relative to the vessel 112 on a line connecting the risky target vessel 114a and the vessel 112 is maintained within a threshold velocity range 402 at least for a threshold time period 304.

At operation 1118, the method 1100 includes triggering an alarm signal upon determining the occurrence of the alarm trigger condition. Further, operations 1102 to 1118 are already explained with reference to FIGS. 1-10, and therefore they are not reiterated again for the sake of brevity.

The disclosed methods with reference to FIG. 9 to FIGS. 11, or one or more operations of the apparatuses 102, 600 or 800 may be implemented using software including computer-executable instructions or machine-readable instructions stored on one or more computer-readable media (e.g., non-transitory computer-readable media, such as one or more optical media discs, volatile memory components (e.g., DRAM or SRAM), or non-volatile memory or storage components (e.g., hard drives or solid-state non-volatile memory components, such as Flash memory components)) and executed on a computer (e.g., any suitable computer, such as a Multi-function device (MFD), Multi-function device black box (MFD-BB), a navigation device, a chart plotter, electronic chart display and information system (ECDIS), a laptop computer, netbook, Webbook, tablet computing device, smartphone, or other mobile computing devices). Such software may be executed, for example, on a single local computer or in a network environment (e.g., via the Internet, a wide-area network, a local-area network, a remote web-based server, a client-server network (such as a cloud computing network), or other such networks) using one or more network computers. Additionally, any of the intermediate or final data created and used during implementation of the disclosed methods or systems may also be stored on one or more computer-readable media (e.g., non-transitory computer-readable media) and are considered to be within the scope of the disclosed technology. Furthermore, any of the software-based embodiments may be uploaded, downloaded, or remotely accessed through a suitable communication means. Such a suitable communication means includes, for example, the Internet, the World Wide Web, an intranet, software applications, cable (including fiber optic cable), magnetic communications, electromagnetic communications (including RF, microwave, and infrared communications), electronic communications, or other such communication means.

Although the present disclosure has been described with reference to specific exemplary embodiments, it is noted that various modifications and changes may be made to these embodiments without departing from the broad spirit and scope of the present disclosure. For example, the various operations, blocks, etc., described herein may be enabled and operated using hardware circuitry (for example, complementary metal-oxide semiconductor (CMOS) based logic circuitry), firmware, software, and/or any combination of hardware, firmware, and/or software (for example, embodied in a machine-readable medium). For example, the apparatuses and methods may be embodied using transistors, logic gates, and electrical circuits (for example, application-specific integrated circuit (ASIC) circuitry and/or in Digital Signal Processor (DSP) circuitry).

Particularly, the processing circuitry 208 among other components of the apparatus 202 may be enabled using software and/or using transistors, logic gates, and electrical circuits (for example, integrated circuit circuitry such as ASIC circuitry). Various embodiments of the present disclosure may include one or more computer programs stored or otherwise embodied on a computer-readable medium, wherein the computer programs are configured to cause a processor or the computer to perform one or more operations. A computer-readable medium storing, embodying, or encoded with a computer program, or similar language, may be embodied as a tangible data storage device storing one or more software programs that are configured to cause a processor or computer to perform one or more operations. Such operations may be, for example, any of the steps or operations described herein. In some embodiments, the computer programs may be stored and provided to a computer using any type of non-transitory computer-readable media. Non-transitory computer-readable media include any type of tangible storage media. Examples of non-transitory computer-readable media include magnetic storage media (such as floppy disks, magnetic tapes, hard disk drives, etc.), optical magnetic storage media (e.g., magneto-optical disks), CD-ROM (compact disc read-only memory), CD-R (compact disc recordable), CD-R/W (compact disc rewritable), DVD (Digital Versatile Disc), BD (BLU-RAY® Disc), and semiconductor memories (such as mask ROM, PROM (programmable ROM), EPROM (erasable PROM), flash memory, RAM (random access memory), etc.). Additionally, a tangible data storage device may be embodied as one or more volatile memory devices, one or more non-volatile memory devices, and/or a combination of one or more volatile memory devices and non-volatile memory devices. In some embodiments, the computer programs may be provided to a computer using any type of transitory computer-readable media. Examples of transitory computer-readable media include electric signals, optical signals, and electromagnetic waves. Transitory computer-readable media can provide the program to a computer via a wired communication line (e.g., electric wires, and optical fibers) or a wireless communication line.

Various embodiments of the disclosure, as discussed above, may be practiced with steps and/or operations in a different order, and/or with hardware elements in configurations, which are different than those which are disclosed. Therefore, although the disclosure has been described based upon these exemplary embodiments, it is noted that certain modifications, variations, and alternative constructions may be apparent and well within the scope of the disclosure.

**Claims**

1. A collision alarm apparatus (102; 600; 800), comprising:

   a velocity sensor (106; 606; 806) associated with a vessel (112) configured to detect velocity data of one or more target vessels (114a, 114b, 114c) relative to the vessel (112);
   a risk analyzer module (104; 602; 802) configured, at least in part, to determine a risky target vessel (114a) having a risk of collision with the vessel (112), the risky target vessel (114a) determined from among the one or more target vessels (114a, 114b, 114c) based on positional information and traveling directions of the one or more target vessels (114a, 114b, 114c) relative to the vessel (112);
   a velocity monitoring module (108; 604; 804) configured, at least in part, to:
   monitor the velocity data of the risky target vessel (114a) relative to the vessel (112) to determine an occurrence of an alarm trigger condition, the alarm trigger condition determined if velocity of the risky target vessel (114a) relative to the vessel (112) on a line connecting the risky target vessel (114a) and the vessel (112) is maintained within a threshold velocity range (402) at least for a threshold time period (304); and
   a control module (110; 610; 810) configured, at least in part, to trigger an alarm signal upon determining the occurrence of the alarm trigger condition.

2. The collision alarm apparatus (102; 600; 800) as claimed in claim 1, wherein the risk analyzer module (104; 602; 802) is further configured, at least in part, to:

   process positional information and traveling direction of each target vessel of the one or more target vessels (114a, 114b, 114c) to determine the risky target vessel (114a); and
   determine a potential collision point (202) of the vessel (112) and the risky target vessel (114a) based on the positional information and the velocity data of the risky target vessel (114a) relative to the vessel (112) on the line connecting the risky target vessel (114a) and the vessel (112).

3. The collision alarm apparatus (102; 600; 800) as claimed in claim 2, wherein the risk analyzer module (104; 602; 802) is further configured, at least in part, to:

   compute a potential collision time (302) based at least on the velocity data of the risky target vessel (114a) relative to the vessel (112) and the potential collision point (202); and
   compute the threshold velocity range (402) and the threshold time period (304) for the risky target vessel (114a) based at least on the velocity data of the risky target vessel (114a) relative to the vessel (112) and the potential collision point (202), wherein the threshold time period (304) is less than the potential collision time (302).

**4.** The collision alarm apparatus (102; 600; 800) as claimed in any of the claims 1 to 3, wherein the velocity monitoring module (108; 604; 804) is further configured, at least in part, to monitor the velocity data of the risky target vessel (114a) relative to the vessel (112) on the line connecting the risky target vessel (114a) and the vessel (112) at a plurality of time instants (502) within the threshold time period (304) to determine the occurrence of the alarm trigger condition.

**5.** The collision alarm apparatus (102; 600; 800) as claimed in any of the claims 1 to 4, further comprising:
an object tracking device (608; 808) associated with the vessel (112), the object tracking device (608; 808) configured, at least in part, to:

transmit electromagnetic waves within a predetermined area of the vessel (112),
determine the one or more target vessels (114a, 114b, 114c) in the predetermined area in response to receipt of the electromagnetic waves being intercepted by the one or more target vessels (114a, 114b, 114c), and
determine the positional information and the velocity data of the one or more target vessels (114a, 114b, 114c) relative to the vessel (112).

**6.** The collision alarm apparatus (102; 600; 800) as claimed in claim 5, wherein the object tracking device (608; 808) is a Doppler radar.

**7.** The collision alarm apparatus (102; 600; 800) as claimed in any of the claims 1 to 6, wherein the velocity sensor (106; 606; 806) is a Doppler velocity sensor.

**8.** The collision alarm apparatus (102; 600; 800) as claimed in any of the claim 5 to 7, wherein the risk analyzer module (104; 602; 802) is further configured, at least in part, to receive at least one of the positional information and the velocity data of the risky target vessel (114a) from a base station (702) communicably coupled to the vessel (112) and the risky target vessel (114a).

**9.** The collision alarm apparatus (102; 600; 800) as claimed in any of the claims 5 to 8, wherein the object tracking device (608; 808) is further configured, at least in part, to receive at least one of the positional information and the velocity data of the risky target vessel (114a) from the risky target vessel (114a).

**10.** The collision alarm apparatus (800) as claimed in any of the claims 1 to 9, further comprising a display interface (814) associated with the vessel (112) and configured to display at least:

the positional information and the traveling direction of the risky target vessel (114a) relative to the vessel (112);
the velocity data of the risky target vessel (114a) relative to the vessel (112); and
a warning notification upon determining the alarm trigger condition.

**11.** The collision alarm apparatus (800) as claimed in any of the claims 1 to 10, further comprising an alarm device (812) associated with the vessel (112), the alarm device (812) configured to emit an alarm in response to receipt of the alarm signal.

**12.** A method (900), comprising:

receiving (902) positional information and traveling directions of one or more target vessels (114a, 114b, 114c) relative to a vessel (112);
determining (904) a risky target vessel (114a) having a risk of collision with the vessel (112), the risky target vessel (114a) determined from among the one or more target vessels (114a, 114b, 114c) based on the positional information and the traveling directions of the one or more target vessels (114a, 114b, 114c) relative to the vessel (112);
monitoring (906) velocity data of the risky target vessel (114a) relative to the vessel (112) to determine an occurrence of an alarm trigger condition, the alarm trigger condition determined if the velocity of the risky target vessel (114a) relative to the vessel (112) on the line connecting the risky target vessel (114a) and the vessel (112) is maintained within a threshold velocity range (402) at least for a threshold time period (304); and
triggering (908) an alarm signal upon determining the occurrence of the alarm trigger condition.

**13.** The method as claimed in claim 12, further comprising:

processing positional information and traveling direction of each target vessel of the one or more target vessels (114a, 114b, 114c) to determine the risky target vessel (114a); and

determining a potential collision point (202) of the vessel (112) and the risky target vessel (114a) based on the positional information and the velocity data of the risky target vessel (114a) relative to the vessel (112) on the line connecting the risky target vessel (114a) and the vessel (112).

**14.** The method as claimed in claim 13, further comprising:

computing a potential collision time (302) based at least on the velocity data of the risky target vessel (114a) relative to the vessel (112) and the potential collision point (202); and

computing the threshold velocity range (402) and the threshold time period (304) for the risky target vessel (114a) based at least on the velocity data of the risky target vessel (114a) relative to the vessel (112) and the potential collision point (202), wherein the threshold time period (304) is less than the potential collision time (302).

**15.** The method as claimed in any of the claims 12 to 14, further comprising determining the velocity data of one or more target vessels (114a, 114b, 114c) relative to the vessel (112) for the step of monitoring.

**Amended claims in accordance with Rule 137(2) EPC.**

**1.** A collision alarm apparatus (102; 600; 800), comprising:

a velocity sensor (106; 606; 806) associated with a vessel (112) configured to detect velocity data of one or more target vessels (114a, 114b, 114c) relative to the vessel (112) on a line connecting the vessel (12) and the respective target vessel (114a, 114b, 114c);

a risk analyzer module (104; 602; 802) configured, at least in part, to determine a risky target vessel (114a) having a risk of collision with the vessel (112), the risky target vessel (114a) determined from among the one or more target vessels (114a, 114b, 114c) based on positional information and traveling directions of the one or more target vessels (114a, 114b, 114c) relative to the vessel (112);

a velocity monitoring module (108; 604; 804) configured, at least in part, to:

monitor the velocity data of the risky target vessel (114a) relative to the vessel (112) to determine an occurrence of an alarm trigger condition, the alarm trigger condition determined if velocity of the risky target vessel (114a) relative to the vessel (112) on a line connecting the risky target vessel (114a) and the vessel (112) is maintained within a threshold velocity range (402) at least for a threshold time period (304); and

a control module (110; 610; 810) configured, at least in part, to trigger an alarm signal upon determining the occurrence of the alarm trigger condition.

**2.** The collision alarm apparatus (102; 600; 800) as claimed in claim 1, wherein the risk analyzer module (104; 602; 802) is further configured, at least in part, to:

process positional information and traveling direction of each target vessel of the one or more target vessels (114a, 114b, 114c) to determine the risky target vessel (114a); and

determine a potential collision point (202) of the vessel (112) and the risky target vessel (114a) based on the positional information and the velocity data of the risky target vessel (114a) relative to the vessel (112) on the line connecting the risky target vessel (114a) and the vessel (112).

**3.** The collision alarm apparatus (102; 600; 800) as claimed in claim 2, wherein the risk analyzer module (104; 602; 802) is further configured, at least in part, to:

compute a potential collision time (302) based at least on the velocity data of the risky target vessel (114a) relative to the vessel (112) and the potential collision point (202); and

compute the threshold velocity range (402) and the threshold time period (304) for the risky target vessel (114a) based at least on the velocity data of the risky target vessel (114a) relative to the vessel (112) and the potential collision point (202), wherein the threshold time period (304) is less than the potential collision time (302).

**4.** The collision alarm apparatus (102; 600; 800) as claimed in any of the claims 1 to 3, wherein the velocity monitoring module (108; 604; 804) is further configured, at least in part, to monitor the velocity data of the risky target vessel (114a) relative to the vessel (112) on the line connecting the risky target vessel (114a) and the vessel (112) at a plurality of time instants (502) within the threshold time period (304) to determine the occurrence of the alarm trigger condition.

5. The collision alarm apparatus (102; 600; 800) as claimed in any of the claims 1 to 4, further comprising:
an object tracking device (608; 808) associated with the vessel (112), the object tracking device (608; 808) configured, at least in part, to:

transmit electromagnetic waves within a predetermined area of the vessel (112),
determine the one or more target vessels (114a, 114b, 114c) in the predetermined area in response to receipt of the electromagnetic waves being intercepted by the one or more target vessels (114a, 114b, 114c), and
determine the positional information and the velocity data of the one or more target vessels (114a, 114b, 114c) relative to the vessel (112).

6. The collision alarm apparatus (102; 600; 800) as claimed in claim 5, wherein the object tracking device (608; 808) is a Doppler radar.

7. The collision alarm apparatus (102; 600; 800) as claimed in any of the claims 1 to 6, wherein the velocity sensor (106; 606; 806) is a Doppler velocity sensor.

8. The collision alarm apparatus (102; 600; 800) as claimed in any of the claim 5 to 7, wherein the risk analyzer module (104; 602; 802) is further configured, at least in part, to receive at least one of the positional information and the velocity data of the risky target vessel (114a) from a base station (702) communicably coupled to the vessel (112) and the risky target vessel (114a).

9. The collision alarm apparatus (102; 600; 800) as claimed in any of the claims 5 to 8, wherein the object tracking device (608; 808) is further configured, at least in part, to receive at least one of the positional information and the velocity data of the risky target vessel (114a) from the risky target vessel (114a).

10. The collision alarm apparatus (800) as claimed in any of the claims 1 to 9, further comprising a display interface (814) associated with the vessel (112) and configured to display at least:

the positional information and the traveling direction of the risky target vessel (114a) relative to the vessel (112);
the velocity data of the risky target vessel (114a) relative to the vessel (112); and
a warning notification upon determining the alarm trigger condition.

11. The collision alarm apparatus (800) as claimed in any of the claims 1 to 10, further comprising an alarm device (812) associated with the vessel (112), the alarm device (812) configured to emit an alarm in response to receipt of the alarm signal.

12. A method (900), comprising:

receiving (902) positional information and traveling directions of one or more target vessels (114a, 114b, 114c) relative to a vessel (112);
determining (904) a risky target vessel (114a) having a risk of collision with the vessel (112), the risky target vessel (114a) determined from among the one or more target vessels (114a, 114b, 114c) based on the positional information and the traveling directions of the one or more target vessels (114a, 114b, 114c) relative to the vessel (112);
sensing the velocity of the risky target vessel (114a) relative to the vessel (112) on the line connecting the risky target vessel (114a) and the vessel (112) and monitoring (906) velocity data of the risky target vessel (114a) relative to the vessel (112) to determine an occurrence of an alarm trigger condition, the alarm trigger condition determined if the velocity of the risky target vessel (114a) relative to the vessel (112) on the line connecting the risky target vessel (114a) and the vessel (112) is maintained within a threshold velocity range (402) at least for a threshold time period (304); and
triggering (908) an alarm signal upon determining the occurrence of the alarm trigger condition.

13. The method as claimed in claim 12, further comprising:

processing positional information and traveling direction of each target vessel of the one or more target vessels (114a, 114b, 114c) to determine the risky target vessel (114a); and

determining a potential collision point (202) of the vessel (112) and the risky target vessel (114a) based on the positional information and the velocity data of the risky target vessel (114a) relative to the vessel (112) on the line connecting the risky target vessel (114a) and the vessel (112).

14. The method as claimed in claim 13, further comprising:

computing a potential collision time (302) based at least on the velocity data of the risky target vessel (114a) relative to the vessel (112) and the potential collision point (202); and

computing the threshold velocity range (402) and the threshold time period (304) for the risky target vessel (114a) based at least on the velocity data of the risky target vessel (114a) relative to the vessel (112) and the potential collision point (202), wherein the threshold time period (304) is less than the potential collision time (302).

15. The method as claimed in any of the claims 12 to 14, further comprising determining the velocity data of one or more target vessels (114a, 114b, 114c) relative to the vessel (112) for the step of monitoring.

114

114a    114b

114c

112

POSITIONAL
INFORMATION
TRAVELING
DIRECTION AND
VELOCITY

COLLISION ALARM APPARATUS 102

RISK
ANALYZER
MODULE 104

VELOCITY
SENSOR
106

VELOCITY
MONITORING
MODULE 108

CONTROL
MODULE 110

100

FIG. 1

FIG. 2

FIG. 3

VELOCITY

THRESHOLD TIME PERIOD 304

402

$V_0$

ALARM
SIGNAL

TIME

FIG. 4A

VELOCITY

THRESHOLD TIME PERIOD 304

402

$V_0$

NO ALARM
SIGNAL

TIME

FIG. 4B

FIG. 5

FIG. 6

COLLISION ALARM APPARATUS 600

| RISK ANALYZER MODULE 602 | VELOCITY SENSOR 606 |

OBJECT TRACKING DEVICE 608

| VELOCITY MONITORING MODULE 604 | CONTROL MODULE 610 |

POSITIONAL INFORMATION AND / OR VELOCITY DATA

BASE STATION 702

# FIG. 7A

COLLISION ALARM APPARATUS 600

| RISK ANALYZER MODULE 602 | VELOCITY SENSOR 606 |

OBJECT TRACKING DEVICE 608

| VELOCITY MONITORING MODULE 604 | CONTROL MODULE 610 |

POSITIONAL INFORMATION AND / OR VELOCITY DATA

114a

# FIG. 7B

FIG. 8

START

RECEIVE POSITIONAL INFORMATION AND TRAVELING DIRECTIONS OF ONE OR MORE TARGET VESSELS RELATIVE TO A VESSEL — 902

DETERMINE A RISKY TARGET VESSEL HAVING A RISK OF COLLISION WITH THE VESSEL, THE RISKY TARGET VESSEL DETERMINED FROM AMONG THE ONE OR MORE TARGET VESSELS BASED ON THE POSITIONAL INFORMATION AND THE TRAVELING DIRECTIONS OF THE ONE OR MORE TARGET VESSELS RELATIVE TO THE VESSEL — 904

MONITOR VELOCITY DATA OF THE RISKY TARGET VESSEL RELATIVE TO THE VESSEL TO DETERMINE AN OCCURRENCE OF AN ALARM TRIGGER CONDITION, THE ALARM TRIGGER CONDITION DETERMINED IF THE VELOCITY OF THE RISKY TARGET VESSEL RELATIVE TO THE VESSEL ON A LINE CONNECTING THE RISKY TARGET VESSEL AND THE VESSEL IS MAINTAINED WITHIN A THRESHOLD VELOCITY RANGE AT LEAST FOR A THRESHOLD TIME PERIOD — 906

TRIGGER AN ALARM SIGNAL UPON DETERMINING THE OCCURRENCE OF THE ALARM TRIGGER CONDITION — 908

STOP

900

FIG. 9

START

RECEIVE POSITIONAL INFORMATION AND TRAVELING DIRECTIONS OF ONE
OR MORE TARGET VESSELS RELATIVE TO A VESSEL
1002

PROCESS POSITIONAL INFORMATION AND TRAVELING DIRECTION OF EACH
TARGET VESSEL OF THE ONE OR MORE TARGET VESSELS
1004

DETERMINE A RISKY TARGET VESSEL HAVING A RISK OF COLLISION WITH
THE VESSEL, THE RISKY TARGET VESSEL DETERMINED FROM AMONG THE ONE OR
MORE TARGET VESSELS BASED ON THE POSITIONAL INFORMATION AND THE
TRAVELING DIRECTIONS OF THE ONE OR MORE TARGET
VESSELS RELATIVE TO THE VESSEL
1006

DETERMINE A POTENTIAL COLLISION POINT OF THE VESSEL AND THE RISKY
TARGET VESSEL BASED ON THE POSITIONAL INFORMATION AND THE VELOCITY DATA
OF THE RISKY TARGET VESSEL RELATIVE TO THE VESSEL ON A LINE
CONNECTING THE RISKY TARGET VESSEL AND THE VESSEL
1008

MONITOR VELOCITY DATA OF THE RISKY TARGET VESSEL RELATIVE TO
THE VESSEL TO DETERMINE AN OCCURRENCE OF AN ALARM TRIGGER
CONDITION, THE ALARM TRIGGER CONDITION DETERMINED IF THE
VELOCITY OF THE RISKY TARGET VESSEL RELATIVE TO THE VESSEL ON
THE LINE CONNECTING THE RISKY TARGET VESSEL AND THE VESSEL IS
MAINTAINED WITHIN A THRESHOLD VELOCITY RANGE AT LEAST FOR
A THRESHOLD TIME PERIOD
1010

TRIGGER AN ALARM SIGNAL UPON DETERMINING THE
OCCURRENCE OF THE ALARM TRIGGER CONDITION
1012

STOP

1000

FIG. 10

START

RECEIVE POSITIONAL INFORMATION AND TRAVELING DIRECTIONS OF ONE OR MORE TARGET VESSELS RELATIVE TO A VESSEL — 1102

PROCESS POSITIONAL INFORMATION AND TRAVELING DIRECTION OF EACH TARGET VESSEL OF THE ONE OR MORE TARGET VESSELS — 1104

DETERMINE A RISKY TARGET VESSEL HAVING A RISK OF COLLISION WITH THE VESSEL, THE RISKY TARGET VESSEL DETERMINED FROM AMONG THE ONE OR MORE TARGET VESSELS BASED ON THE POSITIONAL INFORMATION AND THE TRAVELING DIRECTIONS OF THE ONE OR MORE TARGET VESSELS RELATIVE TO THE VESSEL — 1106

DETERMINE THE VELOCITY DATA OF ONE OR MORE TARGET VESSELS RELATIVE TO THE VESSEL — 1108

DETERMINE A POTENTIAL COLLISION POINT OF THE VESSEL AND THE RISKY TARGET VESSEL BASED ON THE POSITIONAL INFORMATION AND THE VELOCITY DATA OF THE RISKY TARGET VESSEL RELATIVE TO THE VESSEL ON A LINE CONNECTING THE RISKY TARGET VESSEL AND THE VESSEL — 1110

COMPUTE A POTENTIAL COLLISION TIME BASED AT LEAST ON THE VELOCITY DATA OF THE RISKY TARGET VESSEL RELATIVE TO THE VESSEL AND THE POTENTIAL COLLISION POINT — 1112

COMPUTE THE THRESHOLD VELOCITY RANGE AND THE THRESHOLD TIME PERIOD FOR THE RISKY TARGET VESSEL BASED AT LEAST ON THE VELOCITY DATA OF THE RISKY TARGET VESSEL RELATIVE TO THE VESSEL AND THE POTENTIAL COLLISION POINT, THE THRESHOLD TIME PERIOD IS LESS THAN THE POTENTIAL COLLISION TIME — 1114

MONITOR VELOCITY DATA OF THE RISKY TARGET VESSEL RELATIVE TO THE VESSEL TO DETERMINE AN OCCURRENCE OF AN ALARM TRIGGER CONDITION, THE ALARM TRIGGER CONDITION DETERMINED IF THE VELOCITY OF THE RISKY TARGET VESSEL RELATIVE TO THE VESSEL ON THE LINE CONNECTING THE RISKY TARGET VESSEL AND THE VESSEL IS MAINTAINED WITHIN A THRESHOLD VELOCITY RANGE AT LEAST FOR A THRESHOLD TIME PERIOD — 1116

TRIGGER AN ALARM SIGNAL UPON DETERMINING THE OCCURRENCE OF THE ALARM TRIGGER CONDITION — 1118

STOP

FIG. 11

1100

Europäisches
Patentamt
European
Patent Office
Office européen
des brevets

## EUROPEAN SEARCH REPORT

Application Number

EP 22 17 8157

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 717 873 A (RIGGS R) 20 February 1973 (1973-02-20) * column 1, line 64 – column 8, line 67 * * figures 1, 3 * * claims 1, 2, 7 * ----- | 1-15 | INV. G08G3/02 G01S13/937 |
| X | US 2009/167592 A1 (KAO SHENG LONG [TW] ET AL) 2 July 2009 (2009-07-02) * paragraph [0007] – paragraph [0035] * * figures 1, 2 * ----- | 1-15 | |
| A | US 2012/274504 A1 (KUBOTA YUGO [JP]) 1 November 2012 (2012-11-01) * paragraphs [0048] – [0055] * ----- | 1-15 | |
| | | | TECHNICAL FIELDS SEARCHED (IPC) G08G G01S |

The present search report has been drawn up for all claims

| Place of search | Date of completion of the search | Examiner |
|---|---|---|
| The Hague | 29 November 2022 | Van den Bosch, I |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

**EP 22 17 8157**

This annex lists the patent family members relating to the patent documents cited in the above-mentioned European search report.
The members are as contained in the European Patent Office EDP file on
The European Patent Office is in no way liable for these particulars which are merely given for the purpose of information.

**29-11-2022**

| Patent document cited in search report | | Publication date | Patent family member(s) | | Publication date |
|---|---|---|---|---|---|
| US 3717873 | A | 20-02-1973 | DE | 2155148 A1 | 10-05-1972 |
| | | | FR | 2112471 A1 | 16-06-1972 |
| | | | GB | 1362587 A | 07-08-1974 |
| | | | IT | 944778 B | 20-04-1973 |
| | | | JP | S5132475 B1 | 13-09-1976 |
| | | | NL | 7115264 A | 09-05-1972 |
| | | | US | 3717873 A | 20-02-1973 |
| US 2009167592 | A1 | 02-07-2009 | TW | 200929104 A | 01-07-2009 |
| | | | US | 2009167592 A1 | 02-07-2009 |
| US 2012274504 | A1 | 01-11-2012 | CN | 102759727 A | 31-10-2012 |
| | | | JP | 2012233743 A | 29-11-2012 |
| | | | US | 2012274504 A1 | 01-11-2012 |

EPO FORM P0459

For more details about this annex : see Official Journal of the European Patent Office, No. 12/82